Europäisches Patentamt

European Patent Office

Office européen des brevets

(19)

(11) Numéro de publication : **0 065 178**
**B1**

(12) **FASCICULE DE BREVET EUROPÉEN**

(45) Date de publication du fascicule du brevet :
30.01.85

(51) Int. Cl.⁴ : **H 02 G 15/14**

(21) Numéro de dépôt : **82103808.0**

(22) Date de dépôt : **04.05.82**

(54) **Jonction multiple pour système sous-marin.**

(30) Priorité : **07.05.81 FR 8109070**

(43) Date de publication de la demande :
**24.11.82 Bulletin 82/47**

(45) Mention de la délivrance du brevet :
**30.01.85 Bulletin 85/05**

(84) Etats contractants désignés :
**DE FR GB IT**

(56) Documents cités :
**DE-C-  521 552**
**FR-A- 2 394 875**
**US-A- 2 155 650**
**US-A- 4 189 620**
**US-A- 4 217 464**

(73) Titulaire : **LES CABLES DE LYON Société anonyme dite:**
**170 quai de Clichy**
**F-92111 Clichy Cedex (FR)**

(72) Inventeur : **Guazzo, Lucien**
**77, rue de la Paix**
**F-62100 Calais (FR)**
Inventeur : **Trezeguet, Jean-Pierre**
**1, rue Fernand Lenel**
**F-62100 Calais (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne une jonction multiple assurant l'interconnexion entre câbles desservant plusieurs directions différentes, en leurs zones de regroupement, et plus particulièrement entre câbles coaxiaux sous-marins ou entre câbles optiques sous-marins, au niveau des accès d'entrée et de sortie d'un répéteur téléphonique sous-marin ou de manière plus générale d'un dispositif intermédiaire ou terminal de liaisons téléphoniques sous-marines. Une telle jonction est décrite par exemple dans le document US-A-2 155 650.

On sait actuellement assurer le raccordement d'un répéteur sous-marin à un câble armé : notamment du point de vue mécanique, l'effort de traction exercé par le câble lors de sa pose est reporté sur le boîtier du répéteur par ancrage sur ledit boîtier de l'armure en fils d'acier protégeant le câble. Cependant, dans le cas des liaisons téléphoniques sous-marines mentionnées ci-dessus, à plusieurs câbles desservant des directions différentes, cette technique ou d'autres techniques connues de raccordement avec un répéteur exigeraient que le répéteur soit équipé d'autant d'accès mécaniques séparés d'entrée ou de sortie que de câbles à raccorder.

La présente invention a pour but de supprimer cette difficulté en assurant la réunion de câbles indépendants à raccorder sur un répéteur en un tronçon unique permettant alors leur raccordement en commun à travers le seul accès mécanique d'entrée ou de sortie du répéteur.

La présente invention a donc pour objet une jonction multiple de câbles armés dans un système sous-marin présentant, en des zones dites de regroupement de câbles, plusieurs câbles desservant différentes directions et une armure auxiliaire, pour le raccordement de ces câbles sur une pièce d'ancrage creuse liée à un boîtier d'appareillage électrique, caractérisée :

— en ce qu'elle comporte une pièce en acier, dite de maintien, de section circulaire montée sur l'ensemble desdits câbles armés pour leur assemblage, et une pièce tubulaire en acier, entourant les âmes respectives de l'ensemble des câbles, montée d'une part en butée sur les portions terminales des armures sectionnées desdits câbles et fixée mécaniquement d'autre part sur ladite pièce d'ancrage que viennent traverser lesdites âmes,

— et en ce que l'armure auxiliaire est enroulée sur l'ensemble des câbles armés assemblés et sur une portion adjacente de ladite pièce tubulaire sur lesquels elle est maintenue en ses extrémités.

Une telle jonction permet de raccorder simultanément plusieurs câbles notamment à l'entrée ou la sortie d'un répéteur à travers un seul accès mécanique correspondant.

Selon une caractéristique préférentielle, ladite jonction comporte en outre une isolation électrique remplissant l'espace intérieur libre de ladite pièce tubulaire et ladite pièce d'ancrage.

L'invention sera décrite ci-après plus en détail à l'aide d'un exemple de réalisation illustré dans le dessin ci-annexé dans lequel,

la figure 1 est une vue de face d'une jonction selon l'invention et

la figure 2 est une vue en coupe de la jonction de la figure 1.

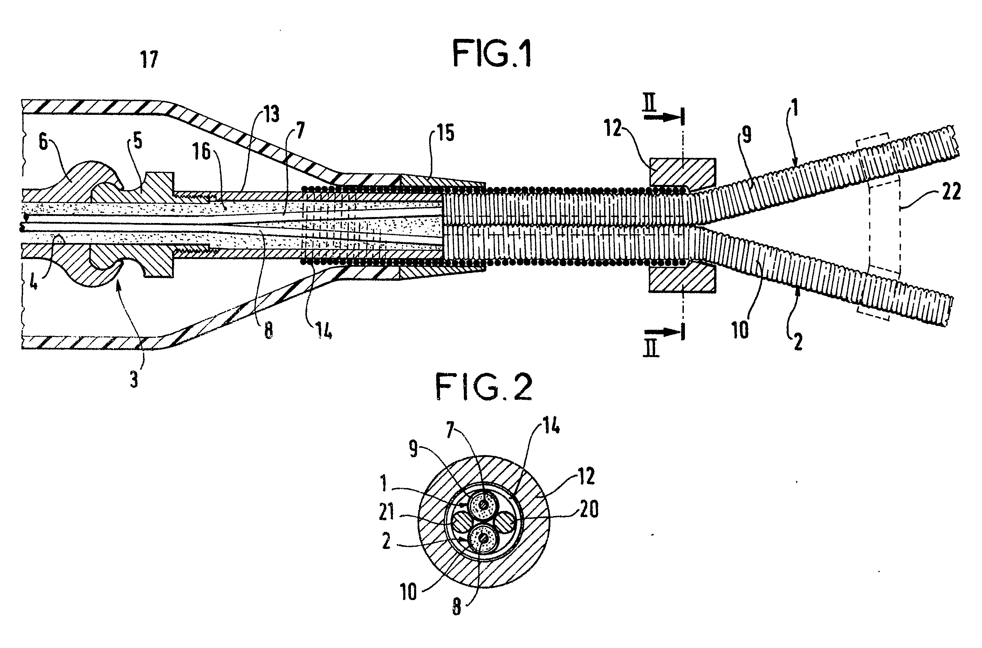

Dans la figure 1, on a illustré une jonction réalisée entre deux câbles armés 1 et 2 pour leur raccordement simultané sur une pièce d'ancrage 3. Cette pièce d'ancrage 3 comporte un passage axial 4. Elle est composée d'une rotule d'ancrage 6 et d'un élément 5 ayant une extrémité sphérique en forme de genou venant s'articuler sur la rotule d'ancrage 6. Cette pièce d'ancrage 3 appartient de manière connue à un ensemble de pièces de liaison mécanique et électrique, assurant une liaison de type articulé ou de type rigide, entre un appareillage électrique, tel qu'un répéteur, et /ou son boîtier et un câble de ligne d'une liaison sous-marine ; on comprendra donc que le type de liaison illustré ici et sa forme ont été donnés simplement à titre d'exemple.

Dans la liaison sous-marine concernée, les deux câbles 1 et 2 sont des câbles armés, ils desservent des directions différentes et sont réunis en leur zone de regroupement. On a repéré en 7 et 8 les âmes des deux câbles et en 9 et 10 leurs armures extérieures respectives, en fils d'acier.

La jonction illustrée comprend :

— une pièce de maintien 12, en acier, de section circulaire, cette pièce de maintien est montée sur les deux câbles armés 1 et 2, indépendants l'un de l'autre, elle les amène côte à côte et les maintient l'un contre l'autre ; d'un côté de cette pièce 12 les deux câbles armés sont donc indépendants et libres, de l'autre côté ils sont toujours électriquement indépendants mais constituent un seul ensemble mécanique,

— une pièce tubulaire 13, également en acier, cette pièce tubulaire 13 est montée autour des âmes 7 et 8 dénudées et entoure l'ensemble des câbles obtenu par la pièce de maintien, elle est sans contact avec ces âmes 7 et 8 qu'elle protège et est montée en butée contre les portions terminales des armures 9 et 10 sectionnées,

— une armure auxiliaire 14 formée de fils d'acier enroulés en hélice sur l'ensemble des câbles armés obtenu par la pièce de maintien 12 et sur une portion adjacente de la pièce tubulaire 13 ; cette armure auxiliaire 14 est maintenue sur l'ensemble des câbles armés par la pièce de maintien 12, à laquelle elle est ancrée par soudure, frettage ou tout autre moyen, elle est par ailleurs maintenue sur la pièce tubulaire 13 sur laquelle sa portion terminale est ancrée,

— une bride 15 en acier montée sur cette armure auxiliaire, au droit des portions terminales des armures 9 et 10 sectionnées et de la pièce tubulaire 13, elle sert au maintien centré du tube 13 par rapport aux extrémités des câbles 1 et 2.

Dans la jonction ainsi réalisée, l'extrémité libre de la pièce tubulaire 13 est fixée sur la pièce d'ancrage 3. Cette pièce 13 présente dans cet exemple une extrémité taraudée qui vient se visser sur l'extrémité libre correspondante filetée de l'élément 5. Les âmes 7 et 8 alors réunies traversent la pièce d'ancrage et peuvent être réunies en un seul conducteur interne.

La jonction comporte en outre, une isolation 16 autour des âmes 7 et 8 dénudées puis du conducteur interne résultant de la réunion des âmes (7, 8), cette isolation 16 est obtenue par injection d'un matériau isolant tel que le polyéthylène dans l'espace intérieur libre de la pièce tubulaire 13 et de la pièce d'ancrage, faite par exemple à travers des perçages non illustrés que présente la pièce tubulaire 13.

Enfin, la jonction raccordant en commun les deux câbles 1 et 2, sur la pièce d'ancrage 3 est complétée par un manchon de protection externe 17, par exemple en néoprène, monté autour de la pièce d'ancrage 3 et de la pièce tubulaire 13 partiellement recouverte par l'armure auxiliaire 14. Ce manchon 17 vient en butée sur la bride 15 qui le maintient, il sera maintenu à son autre extrémité sur le boîtier de l'appareillage électrique non représenté.

On notera également, comme on peut le voir dans la figure 2 qui représente une coupe faite au niveau de la pièce de maintien 12, que des éléments de bourrage 20 et 21 sont associés aux câbles 1 et 2 dans la pièce de maintien 12 pour que l'ensemble conserve une structure circulaire.

En outre, ainsi que schématisé en pointillés dans la figure 1, l'écartement des câbles armés 1 et 2, avant leur jonction peut être maintenu par des pièces auxiliaires 22 de maintien d'écartement.

Dans la version illustrée dans la figure 1, les âmes des câbles 1 et 2, sur chacun desquels l'isolation initiale individuelle qui la recouvre a été conservée pénètrent côte à côte simultanément dans le passage axial de la pièce d'ancrage 3. Mais ces âmes peuvent également être raccordées ensemble si le besoin s'en fait sentir.

L'invention a été décrite en regard des représentations données dans le dessin ci-annexé. Ainsi, les âmes décrites peuvent être constituées de câbles à fibres optiques, de câbles coaxiaux ou de câbles à fils électriques. Il est évident aussi que la jonction peut concerner non plus deux câbles mais trois ou même davantage qui en une zone de regroupement sont à connecter à un même appareillage électrique, à l'entrée ou la sortie de celui-ci, à travers un équipement d'ancrage solidaire du boîtier de cet appareillage.

**Revendications**

1. Jonction multiple de câbles armés (1, 2) dans un système sous-marin présentant, en des zones dites de regroupement de câbles, plusieurs câbles desservant différentes directions et une armure auxiliaire (14) pour le raccordement de ces câbles sur une pièce d'ancrage creuse (3) liée à un boîtier d'appareillage électrique, caractérisée :
— en ce qu'elle comporte une pièce en acier (12), dite de maintien, de section circulaire montée sur l'ensemble desdits câbles armés (1, 2) pour leur assemblage, et une pièce tubulaire (13), en acier, entourant les âmes respectives (7, 8) de l'ensemble des câbles (1, 2), montée d'une part en butée sur les portions terminales des armures sectionnées (9, 10) desdits câbles (1, 2) et fixée mécaniquement d'autre part sur ladite pièce d'ancrage (3) que viennent traverser lesdites âmes,
— et en ce que l'armure auxiliaire (14) est enroulée sur l'ensemble des câbles armés (1, 2) assemblés et sur une portion adjacente de ladite pièce tubulaire (13) sur lesquels elle est maintenue en ses extrémités.

2. Jonction selon la revendication 1, caractérisée par le fait qu'elle comporte une isolation électrique (16) remplissant l'espace intérieur libre de ladite pièce tubulaire (13) et ladite pièce d'ancrage (3).

3. Jonction selon les revendications 1 et 2, caractérisée par le fait qu'elle comporte une bride (15) en acier montée sur ladite armure auxiliaire (14) au droit des portions terminales des armures (9, 10) sectionnées desdits câbles (1, 2) et d'une portion adjacente de ladite pièce tubulaire (13), pour maintenir ladite pièce tubulaire (13) centrée par rapport à l'ensemble desdits câbles (1, 2).

4. Jonction selon l'une des revendications 1 à 3, caractérisée par le fait qu'elle comporte des éléments de bourrage (20, 21) montée avec lesdits câbles armés (1, 2) dans cette pièce de maintien (12), pour que l'ensemble obtenu conserve sensiblement une structure circulaire.

5. Jonction selon l'une des revendications 1 à 4, caractérisée en ce qu'elle comporte en outre, un manchon (17) de protection externe monté autour de ladite pièce tubulaire (13), en étant fixé sur ladite armure auxiliaire (14), et autour de ladite pièce d'ancrage (3).

6. Jonction selon l'une des revendications 1 à 5, caractérisée par le fait que ladite armure auxiliaire (14), est ancrée à ladite pièce de maintien (12) et sur ladite pièce tubulaire (13).

7. Jonction selon l'une des revendications 1 à 6, caractérisée par le fait que lesdites âmes (7, 8) sont protégées par leur isolation individuelle et traversent simultanément, côte à côte, ladite pièce d'ancrage (3).

8. Jonction selon l'une des revendications 1 à 6, caractérisée par le fait que lesdites âmes (7, 8) sont dénudées à l'intérieur de ladite pièce tubulaire (13) et traversent la pièce d'ancrage (3) en étant réunies l'une à l'autre.

9. Jonction selon l'une des revendications 1 à 6, caractérisée par le fait que lesdites âmes (7, 8) sont constituées de câbles à fibres optiques.

**Claims**

1. A multiple connection of armoured cables (1, 2) in an undersea system presenting, in areas called cable regrouping areas, a plurality of cables serving different directions and an auxiliary armour (14) for the connection of these cables on a hollow anchoring piece (3) connected to a housing of electrical apparatus, characterized
— in that it comprises a steel piece (12) of circular section called maintenance piece, mounted on the entity of said armoured cables (1, 2) for their assembly, and a tubular steel piece (13) surrounding the respective cores (7, 8) of the entity of cables (1, 2) abutting on the one hand against the end portions of the severed armours (9, 10) of said cables (1, 2) and being on the other hand mechanically fixed to said anchoring piece (3) which is traversed by said cores,
— and in that the auxiliary armour (14) is wound on the entity of assembled armoured cables (1, 2) and on an adjacent portion of said tubular piece (13) at the ends of which it is maintained.

2. A connection according to claim 1, characterized in that it comprises an electrical insulation (16) filling the free inner space of said tubular piece (13) and said anchoring piece (3).

3. A connection according to claims 1 and 2, characterized in that it comprises a steel clamp (15) mounted on said auxiliary armour (14) at the level of the end portions of the severed armours (9, 10) of said cables (1, 2) and of an adjacent portion of said tubular piece (13), for maintaining said tubular piece (13) in a centered position with respect to the entity of said cables (1, 2).

4. A connection according to one of claims 1 to 3, characterized in that it comprises filler elements (20, 21) mounted with said armoured cables (1, 2) in this maintenance piece (12), so that the obtained entity essentially conserves a circular structure.

5. A connection according to one of claims 1 to 4, characterized in that it further comprises an external protection sleeve (17) mounted around said tubular piece (13) and being fixed on said auxiliary armour (14) and around the anchoring piece (3).

6. A connection according to one of claims 1 to 5, characterized in that said auxiliary armour (14) is anchored to said maintenance piece (12) and on said tubular piece (13).

7. A connection according to one of claims 1 to 6, characterized in that said cores (7, 8) are protected by the individual insulation and pass simultaneously, side by side, through said anchoring piece (3).

8. A connection according to one of claims 1 to 6, characterized in that said cores (7, 8) are bared within said tubular piece (13) and pass through the anchoring piece (3) while being attached to one another.

9. A connection according to one of claims 1 to 6, characterized in that said cores (7, 8) are constituted by glass fibre cables.

**Ansprüche**

1. Mehrfachverbindung von bewehrten Kabeln (1, 2) in einem Unterwassersystem, die in Kabel-Sammelbereich genannten Bereichen mehrere Kabel für verschiedene Richtungen und eine Hilfsbewehrung (14) für den Anschluß dieser Kabel an ein hohles Verankerungsstück (3) aufweist, das mit einem Gehäuse einer elektrischen Apparatur verbunden ist, dadurch gekennzeichnet, daß
— sie ein Haltestück (12) kreisförmigen Querschnitts aus Stahl, das auf die Gesamtheit der bewehrten Kabel (1, 2) zu ihrem Zusammenhalt angeordnet ist, und ein rohrförmiges Stück (13) aus Stahl aufweist, das die jeweiligen Seelen (7, 8) aller Kabel (1, 2) umgibt und einerseits in Anschlag auf die Endbereiche der abgeschnittenen Bewehrungen (9, 10) der Kabel (1, 2) angeordnet und andererseits auf dem Verankerungsstück (3) mechanisch befestigt ist, das von den Seelen durchquert wird,
— und daß die Hilfsbewehrung (14) auf die Gesamtheit der zusammengebauten bewehrten Kabel (1, 2) und auf einen angrenzenden Bereich des rohrförmigen Stücks (13) aufgewickelt ist, auf denen sie mit ihren Enden festgehalten wird.

2. Verbindung nach Anspruch 1, dadurch gekennzeichnet, daß sie eine elektrische Isolierung (16) aufweist, die den freien Innenraum des rohrförmigen Stücks (13) und des Verankerungsstücks (3) ausfüllt.

3. Verbindung nach den Ansprüchen 1 und 2, dadurch gekennzeichnet, daß sie einen Klemmring (15) aus Stahl aufweist, der auf dieser Hilfsbewehrung (14) in Höhe der Endbereiche der abgeschnittenen Bewehrungen (9, 10) der Kabel (1, 2) und eines angrenzenden Bereichs des Rohrstücks (13) aufgebracht ist, um das rohrförmige Stück (13) in bezug auf die Gesamtheit der Kabel (1, 2) zentriert zu halten.

4. Verbindung nach einem der Ansprüche 1 bis 3, dadurch gekennzeichnet, daß sie Füllelemente (20, 21) aufweist, die mit den bewehrten Kabeln (1, 2) in dem Haltestück (12) montiert sind, damit die erhaltene Einheit eine im wesentlichen kreisförmige Struktur behält.

5. Verbindung nach einem der Ansprüche 1 bis 4, dadurch gekennzeichnet, daß sie außerdem eine äußere Schutzhülse (17) aufweist, die um das rohrförmige Stück (13) herum angebracht und auf der Hilfsbewehrung (14) und um das Verankerungsstück (3) herum befestigt ist.

6. Verbindung nach einem der Ansprüche 1 bis 5, dadurch gekennzeichnet, daß die Hilfsbewehrung (14) an dem Haltestück (12) und auf dem rohrförmigen Stück (13) verankert ist.

7. Verbindung nach einem der Ansprüche 1 bis 6, dadurch gekennzeichnet, daß die Seelen (7, 8) durch ihre individuelle Isolierung geschützt sind und zugleich nebeneinander das Verankerungsstück (3) durchqueren.

8. Verbindung nach einem der Ansprüche 1 bis 6, dadurch gekennzeichnet, daß die Seelen (7, 8) im Inneren des rohrförmigen Stücks (13) blank sind und das Verankerungsstück (3) miteinander vereint durchqueren.

9. Verbindung nach einem der Ansprüche 1 bis 6, dadurch gekennzeichnet, daß die Seelen (7, 8) aus Glasfaserkabeln bestehen.

FIG.1

FIG.2